# FASCICULE DE BREVET EUROPEEN

(11) **EP 2 431 926 B1**
(45) Date de publication et mention de la délivrance du brevet: **23.05.2018**
(21) Numéro de dépôt: 11181127.9
(22) Date de dépôt: 13.09.2011
(51) Int. Cl.: G06K 19/073, G06K 19/077

(54) **Carte nfc pour dispositif portatif**
NFC Karte für ein tragbares Gerät
NFC card for handheld device

(30) Priorité: 21.09.2010 FR 1003752; 21.09.2010 FR 1003754
(43) Date de publication de la demande: 21.03.2012
(73) Titulaire: Inside Secure, 13590 Meyreuil (FR)
(72) Inventeur: Cordier, Nicolas, 13080 LUYNES (FR)
(74) Mandataire: Marchand, André

(56) Documents cités:
- WO-A1-98/58509
- US-A1- 2007 023 517
- US-A1- 2009 108 063

## Description

La présente invention concerne les cartes NFC (Near Field Communication), et plus particulièrement les cartes NFC destinées à être insérées dans un dispositif portatif tel qu'un téléphone portable. La présente invention concerne également un procédé permettant d'établir une communication sans contact entre une carte NFC et un dispositif NFC externe.

Les cartes NFC connues destinées à être insérées dans des dispositifs portatifs sont par exemple des cartes SIM-NFC (Subscriber Identity Modules), ou des cartes SD-NFC (Secure Digital). La publication internationale WO 98/58509 décrit une carte SIM-NFC comprenant des plages de contact, un microprocesseur, un module NFC, et une bobine d'antenne. La bobine d'antenne présente un ou plusieurs enroulements coaxiaux coplanaires parallèles au plan de la carte, et par conséquent présente un axe magnétique perpendiculaire au plan de la carte. Elle peut effectuer des communications à contact avec le téléphone portable par les plages de contact et une communication NFC avec un dispositif NFC externe par la bobine d'antenne.

Lorsque la carte et le dispositif NFC externe sont placés suffisamment près l'un de l'autre, la bobine d'antenne de la carte est couplée inductivement à une bobine d'antenne du dispositif NFC externe, et des données peuvent être échangées en utilisant des techniques NFC classiques telles que celles définies par les normes ISO 14443, ISO 15693, et Sony Felica®.

Dans la plupart des applications, le dispositif externe émet un champ magnétique alors que la carte NFC est passive et envoie des données par modulation de charge. A cet effet, la bobine d'antenne de la carte est associée à des composants passifs (ex. condensateurs) pour former un circuit d'antenne accordé à une fréquence de fonctionnement du dispositif externe, par exemple 13,56 MHz. Le document DE 195 42 900 A1 divulgue une telle carte sans-contact. Les dispositifs portatifs contiennent souvent des parties métalliques ou des composants métalliques. Lorsqu'une carte NFC est insérée dans un dispositif portatif, ces parties ou ces composants métalliques réduisent l'inductance de la bobine d'antenne, altérant ainsi la fréquence d'accord du circuit d'antenne et réduisant la distance de communication maximale entre la carte NFC et le dispositif externe.

Il est difficile pour les fabricants de cartes NFC de savoir en avance dans quelles conditions une carte NFC sera utilisée, c'est-à-dire quel sera l'environnement métallique de la carte. L'emplacement de la carte peut varier significativement d'un dispositif portatif à un autre. L'emplacement peut être plus ou moins électromagnétiquement protégé, et le dispositif portatif peut comprendre un nombre variable de parties métalliques à proximité de la carte. Par conséquent, la distance de communication maximale de la carte dépend largement de l'environnement de la carte et peut varier significativement en fonction du dispositif portatif dans lequel la carte est insérée.

De plus, les dispositifs portatifs sont parfois conçus pour que les cartes NFC soient placées sous leur batterie, ce qui peut être le cas par exemple lorsque le connecteur recevant la carte est monté sur la carte de circuit imprimé principale du dispositif portatif (carte mère). Dans ce cas, la batterie peut s'étendre sur la bobine d'antenne et traverser son axe magnétique. Par conséquent, la distance de communication maximale est encore plus réduite de telle sorte que les communications sans contact deviennent impossibles ou possibles uniquement avec une très courte distance de communication.

De plus, le champ magnétique émis par le dispositif externe induit des courants de Foucault dans les parties métalliques, qui créent un contre-champ magnétique qui tend à neutraliser le champ magnétique, réduisant ainsi d'autant plus la distance de communication maximale entre la carte NFC et le dispositif externe.

Il peut par conséquent être souhaité de prévoir une carte NFC qui offre une distance de communication maximale moins dépendante de l'environnement de la carte, lorsque la carte est insérée dans un dispositif portatif.

Des modes de réalisation de l'invention concernent une carte NFC comprenant un circuit d'antenne comprenant une bobine d'antenne présentant au moins un axe magnétique, et au moins un circuit intégré relié au circuit d'antenne, dans laquelle l'axe magnétique de la bobine d'antenne est sensiblement parallèle à au moins un côté de la carte, la carte comprend en outre au moins un écran électriquement conducteur s'étendant à proximité de la bobine d'antenne, qui ne traverse pas l'axe magnétique, et la carte ne comprend aucun matériau magnétiquement perméable entre l'écran conducteur et la bobine d'antenne.

Selon un mode de réalisation, le circuit d'antenne présente une fréquence d'accord qui a été réglée en présence de l'écran conducteur, et qui ne se désaccorde pas lorsqu'un élément métallique est placé à proximité de l'écran électriquement conducteur.

Selon un mode de réalisation, la carte comprend des plages de contact agencées sur un premier côté de la carte.

Selon un mode de réalisation, l'écran conducteur s'étend sur ou à proximité du premier côté de la carte.

Selon un mode de réalisation, l'écran conducteur s'étend sur ou à proximité d'un second côté de la carte.

Selon un mode de réalisation, la carte comprend un premier écran conducteur s'étendant sur un côté de la bobine d'antenne sans traverser son axe magnétique, et un second écran conducteur s'étendant sur un autre côté de la bobine d'antenne sans traverser son axe magnétique.

Selon un mode de réalisation, la bobine d'antenne est enroulée autour d'un coeur magnétiquement perméable.

Selon un mode de réalisation, le circuit intégré est configuré pour mettre en oeuvre un procédé de modulation de charge active comprenant l'étape consistant à émettre des salves de champ magnétique au moyen d'une bobine d'antenne lorsque des données doivent être envoyées, afin de compenser l'effet négatif de l'écran sur la distance de communication maximale offerte par la carte en ce qui concerne l'envoi des données par modulation de charge.

Selon un mode de réalisation, la bobine d'antenne comprend au moins deux bobines en série, les bobines présentant des axes magnétiques non parallèles, pour améliorer la détection d'un contre-champ magnétique généré par des courants de Foucault lorsque la carte est agencée à proximité d'une carte de circuit imprimé en présence d'un champ magnétique externe.

Selon un mode de réalisation, l'écran conducteur comprend au moins une fente afin de réduire l'effet des courants de Foucault circulant dans l'écran conducteur en présence d'un champ magnétique externe.

Selon un mode de réalisation, l'écran conducteur est divisé en au moins deux sous écrans afin de réduire l'effet des courants de Foucault circulant dans l'écran conducteur en présence d'un champ magnétique externe.

Des modes de réalisation de l'invention concernent également un procédé d'accord d'une bobine d'antenne d'une carte NFC, comprenant les étapes consistant à prévoir une carte selon l'invention, et régler une fréquence d'accord du circuit d'antenne en présence de l'écran électriquement conducteur.

Des modes de réalisation de l'invention concernent également un procédé permettant d'effectuer une communication sans contact entre une carte NFC et un dispositif NFC externe, comprenant les étapes consistant à prévoir une carte NFC selon l'invention, régler une fréquence d'accord du circuit d'antenne de la carte en présence de l'écran électriquement conducteur, émettre un premier champ magnétique oscillant avec le dispositif externe, placer la carte à proximité des bords d'une carte de circuit imprimé, et utiliser l'écran conducteur pour protéger la fréquence d'accord du circuit d'antenne contre l'effet de désaccord de la carte de circuit imprimé, afin d'augmenter la distance de communication maximale entre la carte et le dispositif externe.

Selon un mode de réalisation, le procédé comprend en outre une étape de détection, avec la bobine d'antenne de la carte NFC, d'un contre-champ magnétique généré par des courants de Foucault dans la carte de circuit imprimé, afin d'augmenter la distance de communication maximale entre la carte et le dispositif externe.

Selon un mode de réalisation, le procédé comprend en outre une étape consistant à émettre des salves d'un second champ magnétique oscillant avec la bobine d'antenne de la carte NFC, alors que le dispositif externe émet le premier champ magnétique oscillant, afin de transférer des données depuis la carte vers le dispositif externe.

Des modes de réalisations de la présente invention vont maintenant être décrits à titre non limitatif, en relation avec les figures jointes parmi lesquelles :
- Les figures 1A, 1B, 1C sont respectivement des vues de dessus, de dessous et en coupe d'un premier mode de réalisation d'une carte NFC selon l'invention,
- La figure 2 est un schéma électrique d'un circuit intégré de la carte NFC,
- Les figures 3A à 3E représentent différents signaux électriques illustrant le fonctionnement de la carte NFC,
- La figure 4 illustre un premier agencement de la carte NFC à l'intérieur du dispositif portatif,
- La figure 5 illustre un mode de réalisation d'un écran conducteur de la carte NFC,
- Les figures 6 et 7 illustrent d'autres modes de réalisation de l'écran conducteur,
- La figure 8 illustre un second agencement de la carte NFC à l'intérieur du dispositif portatif,
- Les figures 9A, 9B illustrent des modes de réalisation d'une bobine d'antenne de la carte NFC, et
- La figure 10 est une vue de dessus d'un second mode de réalisation d'une carte NFC selon l'invention.

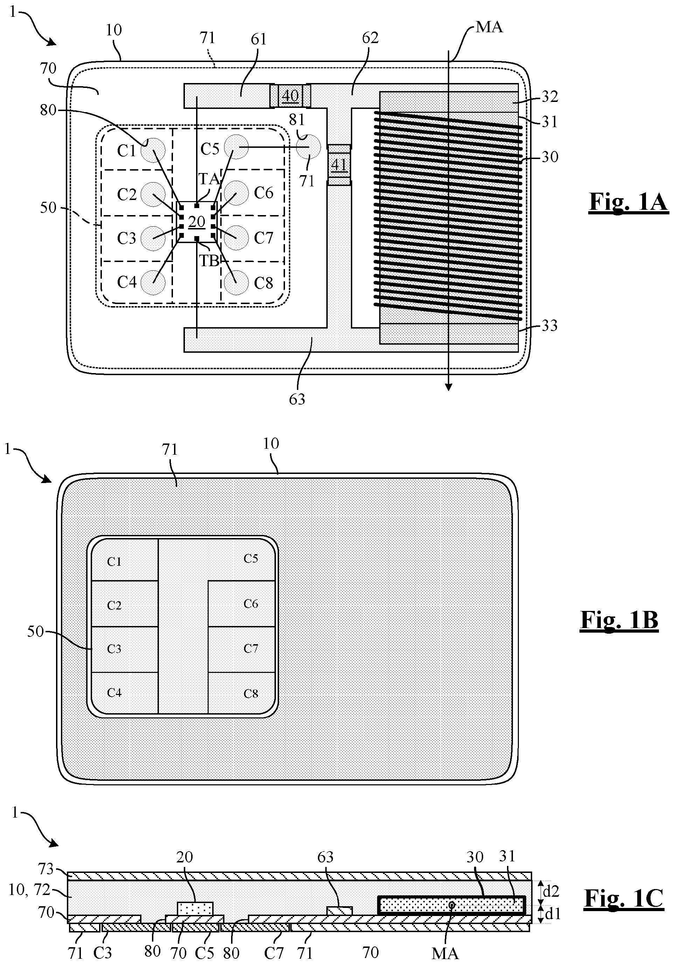

Les figures 1A, 1B, 1C sont respectivement des vues de dessus, de dessous et en coupe d'une carte NFC 1 selon l'invention. La carte NFC peut être une carte SIM-NFC destinée à être insérée dans un téléphone portable. Sur la figure 1A, des éléments internes de la carte sont illustrés à travers un matériau dans lequel ils sont implantés.

La carte NFC 1 comprend un corps en plastique 10, un circuit intégré 20, un circuit d'antenne accordé comprenant une bobine d'antenne 30 et des condensateurs d'accord 40, 41, et un groupe 50 de plages de contact (en pointillés). Le circuit intégré 20 est un dispositif double à contact/sans contact et est conçu pour effectuer des communications à contact ou sans contact. Le circuit intégré 20 peut être un circuit intégré sécurisé pour une carte SIM-NFC.

Le groupe 50 de plages de contact comprend huit contacts ISO 7816 classiques C1 (Vcc), C2 (RST), C3 (CLK), C4 (RFU), C5 (GND), C6 (Vpp), C7 (I/O), et C8 (RFU) auxquels les bornes du circuit intégré 20 sont reliées. Le circuit intégré 20 présente des bornes supplémentaires TA, TB reliées à la bobine d'antenne et aux condensateurs 40, 41.

La bobine d'antenne 30 présente des enroulements coaxiaux non coplanaires et un axe magnétique MA sensiblement parallèle au plan de la carte. "Sensiblement" signifie que l'axe magnétique MA est parallèle au plan de la carte avec une précision qui dépend du processus de fabrication de la carte, par exemple ± 10°.

La bobine d'antenne 30 est de préférence enroulée autour d'un coeur magnétiquement conducteur 31, et le coeur est de préférence en un matériau hautement perméable tel que la ferrite.

La carte 1 comprend également au moins un écran électriquement conducteur, ici deux écrans. Un premier écran 71 (figures 1A, 1B, 1C) est agencé sous la bobine d'antenne 30 à une distance d1 de son axe magnétique. Un second écran 73 (figure 1C) est agencé sur la bobine d'antenne 30 à une distance d2 de son axe magnétique. Aucun matériau magnétiquement conducteur, en particulier la ferrite, n'est agencé entre la bobine d'antenne et les écrans conducteurs.

Dans le mode de réalisation illustré sur les figures 1A-1C, les premier et second écrans conducteurs 71, 73 sont sensiblement planaires et de préférence orientés de telle sorte qu'ils soient sensiblement parallèles à l'axe magnétique MA de la bobine d'antenne. "Sensiblement parallèles" signifie que les écrans sont parallèles à l'axe magnétique MA avec une précision qui dépend du processus de fabrication de la carte, par exemple ± 10°. Les premier et second écrans conducteurs 71, 73 s'étendent sur les côtés inférieur et supérieur de la carte et couvrent presque toutes les surfaces des faces supérieure et inférieure. Chaque écran présente une épaisseur qui dans certains modes de réalisation peut être au moins égale à l'épaisseur de peau à la fréquence d'accord du circuit d'antenne, par exemple approximativement 18 µm pour une fréquence d'accord de 13,56 MHz. Dans un mode de réalisation, au moins un écran par exemple l'écran 71, est connecté au potentiel de masse du circuit intégré.

En règle générale, concernant l'orientation des écrans conducteurs par rapport à l'axe magnétique MA de la bobine d'antenne, les écrans conducteurs doivent être agencés de telle sorte qu'ils ne traversent pas l'axe magnétique. Cette règle paraît évidente lorsque les écrans sont planaires et orientés de telle sorte qu'ils soient sensiblement parallèles à l'axe magnétique MA.

Le circuit d'antenne comprenant la bobine d'antenne 30 et les condensateurs d'accord 40, 41 est accordé à une fréquence de fonctionnement spécifique par exemple 13,56 MHz tel que requis par les normes ISO 14443, ISO 15693, et Sony Felica®. L'accord s'effectue en présence des écrans électriquement conducteurs 71, 73. Les écrans conducteurs 71, 73 protégeront ensuite le circuit d'antenne accordé de l'influence de désaccord que les parties métalliques peuvent avoir sur la fréquence d'accord une fois que la carte est agencée dans un dispositif portatif tel qu'un téléphone portable.

En d'autres termes, étant donné que l'environnement métallique de la carte n'est généralement pas connu en avance et dépend du dispositif dans lequel la carte est insérée, les écrans conducteurs permettent de créer une perturbation métallique connue fixe à proximité de la bobine d'antenne, et d'accorder le circuit d'antenne en présence de cette perturbation métallique. Par conséquent, les écrans conducteurs 71, 73 créent une "perturbation volontaire" du circuit d'antenne qui est prise en compte lorsque le circuit d'antenne est accordé, et qui prévaudra sur les perturbations des parties métalliques du dispositif dans lequel ils seront insérés.

Dans le mode de réalisation illustré sur les figures 1A-1C, la carte 1 est faite à partir d'une carte de circuit imprimé (PCB) comprenant un substrat diélectrique 70 électriquement isolant, et des couches électriquement conductrices supérieure et inférieure agencées sur les faces supérieure et inférieure du substrat 70. La couche conductrice inférieure est gravée pour former le groupe 50 de plages de contact C1-C8 et l'écran 71, qui sont isolés les uns des autres par des espacements. La couche conductrice supérieure est gravée pour former des pistes conductrices 61, 62, 63.

La borne TA du circuit intégré 20 est reliée par fil à la piste conductrice 61. La borne TB du circuit intégré 20 est reliée par fil à la piste conductrice 63. D'autres bornes du circuit intégré sont reliées par fil aux plages de contact C1-C8 par des ouvertures 80 pratiquées dans le substrat 70. Optionnellement, le premier écran conducteur 71 est relié par fil à la plage de masse C5, à l'aide d'un fil passant par une ouverture supplémentaire 81 dans le substrat 70, puis passant par l'une des ouvertures 80 vers la plage de contact C5.

Le condensateur 40 présente une première borne connectée à la piste conductrice 61 et une seconde borne connectée à la piste conductrice 62. Le condensateur 41 présente une première borne connectée à la piste conductrice 62 et une seconde borne connectée à la piste conductrice 63. La bobine d'antenne 30 présente une première borne 32 connectée à la piste conductrice 62 et une seconde borne 33 connectée à la piste conductrice 63. Le condensateur 41 est par conséquent agencé en parallèle avec la bobine d'antenne 40 et le condensateur 41 est agencé en série entre la première borne 32 de la bobine d'antenne et la borne TA du circuit intégré 20.

Le circuit intégré 20, la bobine d'antenne 30, les condensateurs 40, 41, et les fils de connexion sont encapsulés dans un matériau polymère 72 s'étendant sur le substrat 70, tel qu'une résine ou du polychlorure de vinyle (PVC), qui forme le corps 10 de la carte.

Le second écran conducteur 73 est formé ou déposé sur le côté supérieur de la carte. Il peut se constituer d'une plaque métallique ou peut comprendre une ou plusieurs couches d'un matériau conducteur, par exemple une peinture conductrice.

Dans un mode de réalisation, la carte présente une épaisseur totale de 804 µm, le substrat 70 présente une épaisseur de 100 µm, le premier écran conducteur 71 présente une épaisseur de 18 µm, le second écran conducteur 73 une épaisseur de 18 µm, et la bobine d'antenne 30 et son coeur 31 présentent une épaisseur de 500 µm. La distance d1 entre le centre de la bobine d'antenne et le premier écran conducteur 71 est de 368 µm et la distance d2 entre le centre de la bobine d'antenne et le premier écran conducteur 71 est de 400 µm.

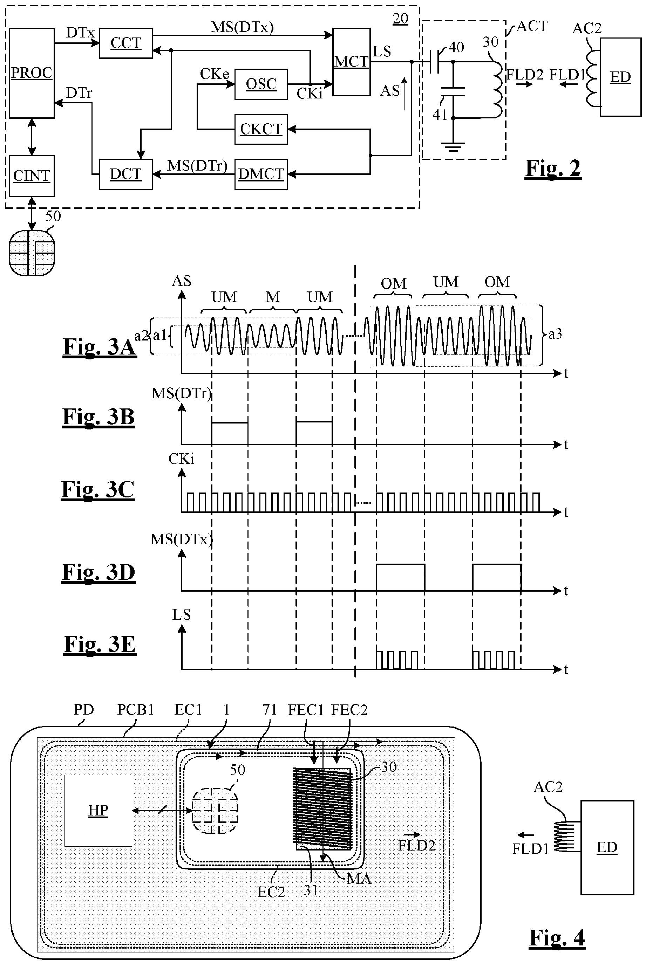

Dans un mode de réalisation préféré, le circuit intégré 20 est configuré pour envoyer des données par couplage inductif au moyen d'un procédé de modulation de charge active. Ce procédé comprend une étape consistant à émettre, en présence d'un dispositif NFC externe émettant en continu un premier champ magnétique alternatif, des salves d'un second champ magnétique alternatif. De telles salves de champ magnétique sont perçues par le dispositif externe comme une modulation de charge passive. Cette technique a été proposé par le demandeur dans le brevet EP 1 327 222 (US 7 098 770B2), Cf. figures 4A à 4E, page 8, tableau 4, paragraphe 074.

En ce qui concerne l'envoi de données par la carte, le procédé de modulation de charge permet d'obtenir une distance de communication maximale satisfaisante malgré la présence des écrans conducteurs 71, 73.

La figure 2 représente sous forme de blocs un exemple d'architecture du circuit intégré 20 mettant en oeuvre un procédé de modulation de charge active. Un dispositif externe ED équipé d'une bobine d'antenne AC2 est également illustré.

Le circuit intégré 20 comprend une interface de communication à contact CINT, un processeur PROC, et des moyens de communication sans contact.

L'interface de communication à contact CINT est reliée au groupe 50 de plages de contact C1-C8 et présente une entrée/sortie connectée au processeur PROC. L'interface CINT assure la gestion de protocole et le codage/décodage de données lors d'une communication à contact entre le processeur PROC et un processeur externe, tel que le processeur de bande de base d'un téléphone portable.

Les moyens de communication sans contact comprennent un circuit de codage CCT, un circuit de décodage DCT, un circuit de modulation MCT, un circuit de démodulation DMCT, un circuit d'horloge CKCT, et un oscillateur synchrone OSC. Ils comprennent également un circuit d'antenne ACT comprenant les condensateurs 40, 41 et la bobine d'antenne 30 précédemment décrite.

Lors d'une communication sans contact avec le dispositif externe ED, le dispositif externe ED émet un champ magnétique FLD1 oscillant à la fréquence de fonctionnement. Le processeur PROC fournit aux moyens de communication sans contact des données DTx à envoyer au dispositif externe ED, et traite des données DTr fournies par les moyens de communication sans contact, reçues du dispositif externe.

Lors d'une telle communication sans contact, un signal d'antenne AS est induit dans le circuit d'antenne ACT par le champ magnétique FLD1. Le circuit d'horloge CKCT reçoit le signal d'antenne AS et en extrait un signal d'horloge externe CKe. Le signal d'horloge externe CKe est, en général, à la même fréquence que la fréquence porteuse.

L'oscillateur synchrone OSC reçoit le signal d'horloge externe CKe et fournit un signal d'horloge interne CKi. L'oscillateur synchrone OSC présente un mode de fonctionnement synchrone dans lequel la phase et la fréquence du signal d'horloge interne CKi sont asservis à ceux du signal d'horloge externe, et un mode de fonctionnement en oscillation libre dans lequel le signal d'horloge externe ne pilote plus l'oscillateur.

Lorsque le dispositif externe ED envoie des données DTr au circuit intégré 20, il module le champ magnétique FLD1 au moyen d'un signal de modulation porteur de données MS(DTr). Puisque le signal d'antenne induit AS est l'image du champ magnétique, le signal de modulation porteur de données est également trouvé dans le signal d'antenne AS.

Le circuit de démodulation DMCT extrait du signal d'antenne AS le signal de modulation MS(DTr), et le fournit au circuit de décodage DCT. Le circuit de décodage DCT décode les données DTr et les fournit au processeur PROC.

Lorsque le circuit intégré 20 envoie des données DTx au dispositif externe ED, les données à envoyer DTx sont d'abord fournies au circuit de codage CCT et l'oscillateur synchrone OSC est placé en mode de fonctionnement en oscillation libre. Le circuit de codage CCT fournit un signal de modulation porteur de données MS(DTx) au circuit de modulation MCT.

Le circuit de modulation MCT combine le signal de modulation porteur de données MS(DTx) et le signal d'horloge interne CKi et fournit un signal de modulation de charge active LS au circuit d'antenne. Le signal de modulation de charge active LS comprend des salves du signal d'horloge interne CKi séparées par des périodes non modulées lors desquelles le signal LS présente une valeur par défaut. Par exemple, le circuit de modulation MCT fournit le signal d'horloge interne CKi comme signal de modulation LS lorsque MS(DTx)=1, et place sa sortie à 0 lorsque MS(DTx)=0. Ainsi, le signal LS est à 0 lorsque le signal MS(DTx) est à 0, et copie le signal Cki lorsque le signal MS(DTx) est à 1. Le circuit d'antenne ACT reçoit ainsi des salves du signal d'horloge interne CKi et la bobine d'antenne 30 émet des salves correspondantes d'un champ magnétique FLD2. Ces salves de champ magnétique sont détectées par le dispositif externe ED comme une modulation de charge passive. Le dispositif externe extrait de sa bobine d'antenne AC2 le signal de modulation porteur de données MS(DTx), puis décode les données DTx envoyées par le circuit intégré 20.

Les figures 3A à 3E illustrent schématiquement une séquence de transmission de données lors de laquelle des données DTr sont reçues par le circuit intégré 20 (partie gauche des figures) et une séquence de transmission de données lors de laquelle des données DTx sont envoyées par le circuit intégré 20 (partie droite des figures). La figure 3A illustre le signal d'antenne AS. La figure 3B illustre le signal de modulation MS (DTr). La figure 3C illustre le signal d'horloge interne CKi. La figure 3D illustre le signal de modulation MS(DTx), et la figure 3E illustre le signal de modulation de charge active LS.

Lorsque le dispositif externe ED envoie des données DTr, il module l'amplitude du champ magnétique FLD1 avec une profondeur de modulation qui dépend du protocole de communication choisi. Tel que représenté dans la partie gauche de la figure 3A, le signal d'antenne AS illustre des périodes modulées M lors desquelles son amplitude présente une valeur minimum a1, et des périodes non modulées UM lors desquelles son amplitude présente une valeur maximum a2.

Tel qu'illustré sur la partie droite de la figure 3A, lorsque le circuit intégré 20 envoie des données DTx, le signal d'antenne présente des périodes non modulées UM de la même amplitude a2 que lors de la réception de données, et des périodes de surtension OM lors desquelles son amplitude présente une valeur survoltée a3. Lors des périodes de surtension, l'amplitude du signal d'antenne est survoltée par l'injection du signal d'horloge interne CKi dans le circuit d'antenne ACT, et le signal CKi est superposé sur le signal induit dans le circuit d'antenne ACT par le champ magnétique externe FLD1. L'injection du signal d'horloge interne CKi provoque des salves du signal magnétique FLD2 à émettre par la carte.

Lorsque la carte est en cours d'utilisation après avoir été placée dans le connecteur de carte d'un dispositif portatif, elle est généralement à proximité de la carte de circuit imprimé (PCB) du dispositif, à une distance verticale ou "distance Z" de celle-ci, par rapport au plan XY de la carte de circuit imprimé. Une telle distance est généralement imprévisible pour le fabricant de carte en ce qui concerne la fabrication des cartes "génériques" (c'est-à-dire les cartes destinées à tout type de téléphone portable). Cette distance Z dépend de la structure du dispositif et de l'emplacement du connecteur de carte. Le connecteur de carte peut être monté directement sur la carte PCB ou agencé plusieurs millimètres au-dessus. L'emplacement XY de la carte par rapport à la carte PCB est également imprévisible, ainsi que l'orientation de l'axe magnétique de la bobine d'antenne par rapport aux bords de la carte PCB.

Lors d'une communication sans contact, la distance de communication maximale entre la carte et le dispositif externe est affectée par divers facteurs et phénomènes physiques dont :
1) l'influence de matériaux métalliques situés sous la carte sur la fréquence d'accord du circuit d'antenne. Ces matériaux métalliques peuvent comprendre des parties métalliques de la carte PCB et d'éventuels composants métalliques ;
2) l'influence des matériaux métalliques situés sur la carte sur la fréquence d'accord du circuit d'antenne. Ces matériaux métalliques peuvent inclure les parties métalliques d'une batterie agencée sur la carte ;
3) l'apparition de courants de Foucault dans la carte PCB. De tels courants de Foucault tendent à neutraliser le champ magnétique FLD1 émis par le dispositif externe ED en générant un contre-champ magnétique local induit en raison de la loi de Lenz. Ils circulent en général à la périphérie de la carte PCB et le contre-champ magnétique apparaît à proximité des bords de la carte PCB ;
4) l'apparition de courants de Foucault dans les premier et second écrans conducteurs 71, 73, qui génèrent également des contre champs magnétiques locaux à proximité de chaque écran.

Les effets de ces différents phénomènes sur le fonctionnement de la carte 1 vont maintenant être décrits de manière simplifiée, à la lumière des exemples d'agencement de la carte 1 dans un dispositif portatif.

La figure 4 représente schématiquement la carte NFC 1 montée ou insérée dans un dispositif portatif HD selon un premier agencement. Le dispositif portatif HD peut être un téléphone portable, un assistant numérique personnel (PDA), etc. Le dispositif portatif comprend une carte de circuit imprimé PCB1 comprenant des parties métalliques telles que des pistes conductrices sur lesquelles des composants électroniques sont montés (non illustrés). Il est supposé par exemple qu'un processeur hôte HP est monté sur la carte PCB1, tel que le processeur de bande de base d'un téléphone portable. Le processeur hôte HP présente des entrées/sorties reliées au groupe 50 de plages de contact de la carte. La figure 4 représente également le dispositif externe ED émettant le champ magnétique FLD1.

Dans cet exemple, la carte 1 est agencée de telle sorte que son côté inférieur, comprenant le premier bouclier conducteur 71, s'étend au-dessus de la carte PCB1, et de telle sorte que son axe magnétique MA est à proximité d'un bord de la carte PCB1 et perpendiculaire à celui-ci. Par souci de simplicité, la figure 4 ne représente que la bobine d'antenne 30, le coeur d'antenne 31, le groupe 50 de plages de contact, et l'écran conducteur 71 ; les autres éléments de la carte ne sont pas illustrés.

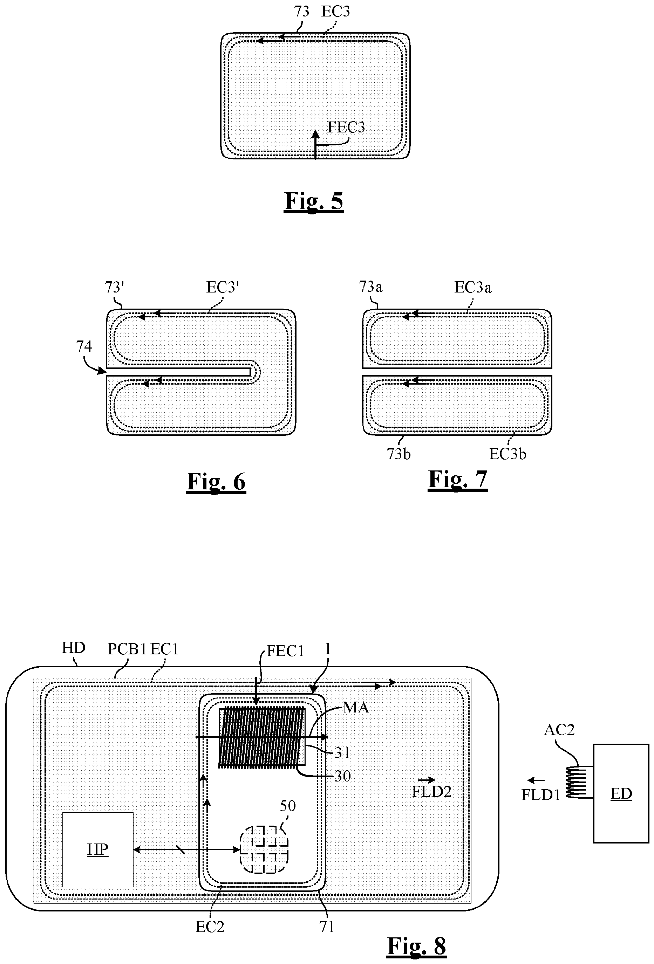

En présence du champ magnétique FLD1, des courants de Foucault EC1 sont induits et circulent sur la périphérie de la carte de circuit imprimé PCB1, en supposant que celui-ci présente un grand plan de masse. Les courants de Foucault EC1 génèrent un contre-champ magnétique FEC1 qui tend à neutraliser le champ magnétique FLD1. Les courants de Foucault EC2 dans l'écran conducteur 71 de la carte génèrent également un contre-champ magnétique FEC2 qui présente la même polarité que le contre-champ magnétique FEC1 vu depuis la bobine d'antenne 30. Tel qu'illustré sur la figure 5 par une vue de dessous de l'écran conducteur 73 (c'est-à-dire l'écran conducteur 73 vu depuis la bobine d'antenne), les courants de Foucault EC3 dans l'écran conducteur 73 génèrent également un contre-champ magnétique FEC3 qui présente une polarité opposée à celle des contre champs magnétiques FEC1 et FEC2, vu depuis la bobine d'antenne 30. Il est supposé ici que si les écrans présentent sensiblement les mêmes dimensions et la même conductivité électrique, les contre-champs magnétiques FEC2 et FEC3 s'annulent l'un l'autre dans la région entre les écrans 71, 73 où la bobine d'antenne 30 est agencée.

Il a été observé que lorsque la carte est agencée tel qu'illustré, c'est-à-dire de telle sorte que la bobine d'antenne soit à proximité de l'un des bords de la carte PCB avec son axe magnétique perpendiculaire au bord, et lorsque la distance Z est faible, la grandeur du contre-champ magnétique FEC1 prévaut sur celle du champ magnétique FLD1 externe et améliore la réception des données DTr envoyées par le dispositif externe ED. Par conséquent, le contre-champ magnétique FEC1 est détecté par la bobine d'antenne 30 au lieu du champ magnétique FLD1 original, permettant à la carte 1 de recevoir des données du dispositif externe ED avec une meilleure distance de communication maximale. Si le coeur d'antenne 31 est fait d'un matériau hautement perméable tel que la ferrite, le coeur concentre les lignes de champ magnétique et la distance de communication maximale en est d'autant plus augmentée.

Les premier et second écrans conducteurs agissent également comme des boucliers pour que la performance de la carte NFC dépende moins de l'environnement métallique située sous elle et sur elle. En particulier, puisque la fréquence d'accord du circuit d'antenne est réglée en présence de l'écran conducteur supérieur 73, l'effet de désaccord provoqué par la présence d'une batterie au-dessus de la carte est significativement atténué.

Divers test ont été effectués pour évaluer l'effet des écrans conducteurs sur les performances de la carte lors d'une communication sans contact.

Une carte NFC ne comprenant pas d'écran électriquement conducteur a tout d'abord été étudiée. La carte a été directement placée sur une carte de circuit imprimé, puis accordée à 13,56 MHz. Un champ magnétique 13,56 MHz a été émis et la tension du signal d'antenne a été mesurée. Puis, la carte a été placée à 2 mm au-dessus de la carte de circuit imprimé sans avoir réaccordé la bobine d'antenne. La fréquence d'accord a été diminuée, et la tension du signal d'antenne était d'environ 33% inférieure à celle du premier cas.

Ces mesures ont été répétées avec la carte NFC 1 comprenant le premier écran conducteur 71 uniquement (le second écran étant destiné aux cartes devant être agencées sous une batterie ou des parties métalliques). La carte 1 a été directement placée sur la carte de circuit imprimé, puis accordée à 13,56 MHz. La tension du circuit d'antenne était identique à celle obtenue sans l'écran conducteur 71. Lorsque la carte 1 a été placée 2 mm au-dessus de la carte de circuit imprimé PCB, la fréquence d'accord n'a pas changé, ni la tension du signal d'antenne.

La figure 6 illustre une première variante 73' du second écran conducteur. L'écran 73' présente une fente longitudinale 74 qui modifie la circulation des courants de Foucault EC3. Les courants de Foucault suivent les bords de l'écran puis les bords de la fente, et par conséquent suivent un chemin en forme de U au lieu d'une boucle autour de la périphérie de l'écran.

La figure 7 illustre une seconde variante du second écran conducteur. L'écran est divisé en deux parties formant deux sous écrans 73a, 73b. Chaque sous écran 73a, 73b est traversé par des courants de Foucault EC3a, EC3b qui circulent en boucles de la moitié de la taille de la boucle suivie par le courant de Foucault EC3 de la figure 5.

Ces variantes du second écran 73 permettent au contre-champ magnétique FEC3 généré par l'écran d'être réduit. Par conséquent, le contre-champ magnétique FEC2 généré par le premier écran 71 n'est pas annulé par le contre-champ magnétique FEC3 et il est ajouté au contre-champ magnétique FEC1 généré par la carte de circuit imprimé PCB1.

Dans d'autres modes de réalisation, l'écran 73 peut présenter plusieurs fentes perpendiculaires à ses bords ou peut être divisé en un grand nombre de sous écrans, de manière à réduire encore la surface des zones entourées par des courants de Foucault.

La figure 8 représente schématiquement la carte NFC 1 montée ou insérée dans le dispositif portatif HD selon un second agencement. La figure 8 est similaire à la figure 4 à l'exception de l'agencement de la carte, qui est tel que l'axe magnétique MA de la bobine d'antenne 30 est parallèle à un bord de la carte de circuit imprimé PCB1 et par conséquent perpendiculaire au contre-champ magnétique FEC1 généré par les courants de Foucault EC1.

Avec un tel agencement, le contre-champ magnétique FEC1 local ne passe pas par la bobine d'antenne 30, et n'augmente pas la distance de communication maximale entre la carte et le dispositif portatif ED. La réception de données envoyées par le dispositif portatif est, dans ce cas, basée sur la détection du champ magnétique FLD1 externe par la bobine d'antenne.

Il peut être noté que, contrairement à la distance maximale de communication pour la réception de données, lorsque la carte envoie des données en émettant des salves de champ magnétique FLD2, la distance de communication maximale pour l'envoi de données n'est pas très sensible à l'emplacement XYZ de la bobine d'antenne par rapport à la carte de circuit imprimé. Ainsi, la distance de communication maximale est environ la même sur la figure 4 et la figure 8 en ce qui concerne l'envoi de données au dispositif externe ED.

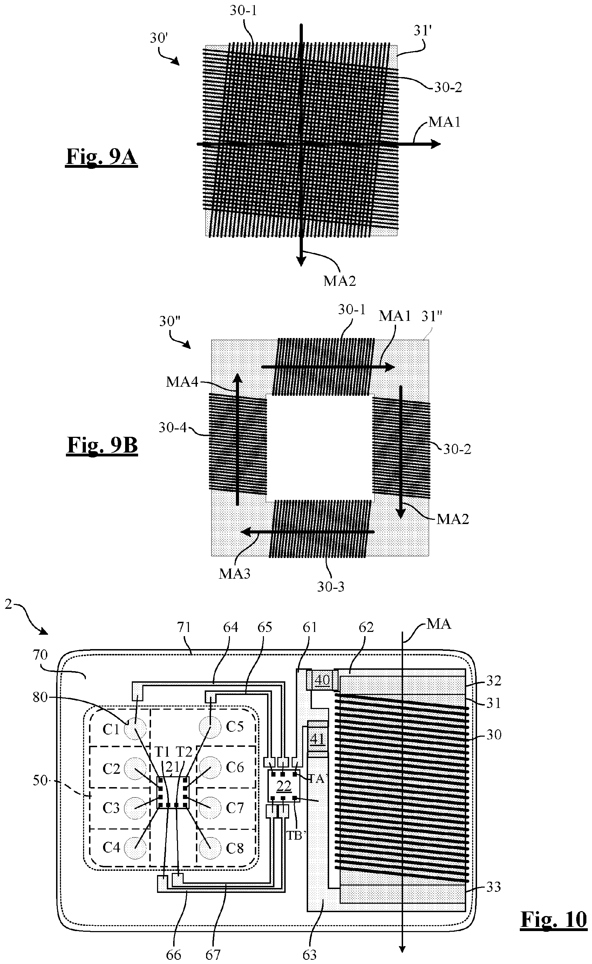

Les figures 9A et 9B illustrent deux modes de réalisation 30', 30" de la bobine d'antenne prévus pour améliorer l'aptitude de la carte à détecter le contre-champ magnétique FEC1 lorsqu'on ne sait pas en avance comment la carte sera agencée par rapport à la carte de circuit imprimé PCB1. Sur la figure 9A, la bobine d'antenne 30' comprend deux bobines 30-1, 30-2 enroulées autour d'un coeur commun 31'. La bobine 30-1 présente un axe magnétique MA1 qui est perpendiculaire à un axe magnétique MA2 de la bobine 30-2.

Sur la figure 9B, la bobine d'antenne 30" comprend quatre bobines 30-1, 30-2, 30-3, 30-4 en série enroulées autour d'un coeur commun en anneau de forme carrée 31". La bobine 30-1 est enroulée autour d'un premier segment du coeur en anneau de forme carrée 31" et présente un axe magnétique MA1. La bobine 30-2 est enroulée autour d'un second segment du coeur en anneau de forme carrée 31" et présente un axe magnétique MA2 perpendiculaire à l'axe magnétique MA1. La bobine 30-3 est enroulée autour d'un troisième segment du coeur en anneau de forme carrée 31" et présente un axe magnétique MA3 perpendiculaire à l'axe magnétique MA2. La bobine 30-4 est enroulée autour d'un quatrième segment du coeur en anneau de forme carrée 31" et présente un axe magnétique MA4 perpendiculaire à l'axe magnétique MA3.

De cette manière, la bobine d'antenne 30' ou 30" peut capturer le contre-champ magnétique FEC1 par l'une des deux bobines 30-1, 30-2 (figure 9A) ou par les quatre bobines 30-1 à 30-4 (figure 9B), que la carte soit agencée tel qu'illustré sur la figure 4 ou la figure 8.

La figure 10 est une vue de dessus d'un autre mode de réalisation d'une carte NFC 2 selon l'invention, des éléments internes de la carte étant illustrés au travers d'un matériau dans lequel ils sont enchâssés.

La carte 2 comprend des éléments similaires à ceux de la carte 1, désignés par les mêmes références, en particulier la bobine d'antenne 30 enroulée autour du coeur 31, les condensateurs 40, 41, et le groupe 50 de plages de contact, ici des plages ISO 7816 C1-C8. La carte 2 présente également l'écran conducteur 71 inférieur, et l'écran conducteur 73 supérieur (non illustrés).

Tel que précédemment décrit, le condensateur 40 présente une première borne connectée à la piste conductrice 61 et une seconde borne connectée à la piste conductrice 62. Le condensateur 41 présente une première borne connectée à la piste conductrice 62 et une seconde borne connectée à la piste conductrice 63. La bobine d'antenne 30 présente une première borne 32 connectée à la piste conductrice 62 et une seconde borne 33 connectée à la piste conductrice 63.

La carte 2 diffère sensiblement de la carte 1 en ce qu'elle comprend deux circuits intégrés 21, 22 sur microplaquettes de semi-conducteur. Le circuit intégré 21 est conçu pour établir une communication à contact avec le processeur d'un dispositif portatif, tel que le processeur HP de la figure 4, et présente des bornes reliées aux plages de contact C1-C8. Le circuit intégré 22 est conçu pour établir une communication sans contact avec un dispositif externe, tel que le dispositif ED de la figure 4, et est relié à la bobine d'antenne 30. Les deux circuits intégrés 21, 22 sont également interconnectés de telle sorte qu'ils peuvent communiquer entre eux.

Le circuit intégré 21 peut être configuré pour gérer des transactions sans contact par le circuit intégré 22, qui peut être configuré pour fonctionner comme un coupleur sans contact. Alternativement, le circuit intégré 22 peut être configuré pour gérer des transactions sans contact et pour en "référer" au circuit intégré 21 lorsque certaines étapes spécifiques doivent être effectuées lors d'une transaction, par exemple une étape d'authentification.

Le circuit intégré 21 est agencé sur le substrat 70 au-dessus du groupe 50 de plages de contact, et présente des bornes reliées par fil aux plages de contact C1-C8 par des ouvertures 80 dans le substrat 70. Le circuit intégré 21 comprend également deux bornes de bus de données T1, T2 reliées par fil aux deux pistes conductrices 66, 67.

Le circuit intégré 22 est agencé sur le substrat 70, entre le circuit intégré 21 et la bobine d'antenne 30. Il comprend une borne TA' reliée par fil à la piste conductrice 61, une borne TB' reliée par fil à la piste conductrice 63, une borne d'alimentation reliée par fil à une piste conductrice 64 de la carte, une borne de masse reliée par fil à une piste conductrice 65 de la carte, une borne de bus de données reliée par fil à la piste conductrice 66, et une borne de bus de données reliée par fil à la piste conductrice 67. La piste conductrice 64 est reliée par fil à la plage de contact C1, et la piste conductrice 65 est reliée par fil à la plage de contact C6.

Il apparaîtra clairement à l'homme de l'art qu'une carte NFC selon la présente invention est susceptible de nombreux autres modes de réalisation. Divers procédés connus dans le domaine de la fabrication de cartes à puce peuvent être utilisés pour fabriquer divers modes de réalisation d'une carte selon l'invention. Dans certains modes de réalisation, le ou les écrans conducteurs peuvent être enchâssés dans le corps de la carte et peuvent s'étendre à proximité d'un côté de la carte. Les faces supérieure et/ou inférieure de la carte peuvent être non planaires. Le ou les écrans peuvent être incurvés au lieu d'être planaires. Le ou les écrans peuvent s'étendre sur seulement une partie de la surface de la carte. Le groupe de plages de contact peut comprendre deux plages de contact seulement pour alimenter la carte lorsqu'elle émet le champ magnétique. La carte peut également être alimentée par une batterie et peut ne pas avoir de plages de contact du tout. La carte peut également être purement passive et configurée pour envoyer des données par modulation de charge passive, et extraire une tension d'alimentation du champ magnétique FLD1 externe.

De plus, dans la présente description et les revendications, le terme "NFC" se réfère à tout type de communication sans contact effectuée par couplage inductif, quel que soit le protocole utilisé et la fréquence de fonctionnement. En outre, le terme "carte NFC" se réfère à tout type de support portatif présentant des capacités NFC.

## Revendications

1. Carte NFC (1, 2) comprenant :
- un circuit d'antenne (ACT) comprenant une bobine d'antenne (30, 30', 30") présentant au moins un axe magnétique (MA, MA1-MA4), et
- au moins un circuit intégré (20, 21, 22) relié au circuit d'antenne,
**caractérisé en ce que** :
- l'axe magnétique de la bobine d'antenne est sensiblement parallèle à au moins un côté de la carte,
- la carte comprend en outre au moins un écran électriquement conducteur (71, 73, 73', 73a, 73b) s'étendant à proximité de la bobine d'antenne, qui ne traverse pas l'axe magnétique, et
- la carte ne comprend aucun matériau magnétiquement perméable entre l'écran conducteur et la bobine d'antenne.

2. Carte NFC selon la revendication 1, dans laquelle le circuit d'antenne présente une fréquence d'accord qui a été réglée en présence de l'écran conducteur, et qui ne se désaccorde pas lorsqu'un élément métallique est placé à proximité de l'écran électriquement conducteur.

3. Carte NFC selon l'une des revendications 1 ou 2, comprenant des plages de contact (50, C1-C8) agencées sur un premier côté de la carte.

4. Carte NFC selon la revendication 3, dans laquelle l'écran conducteur (73) s'étend sur ou à proximité du premier côté de la carte.

5. Carte NFC selon la revendication 3, dans laquelle l'écran conducteur (71) s'étend sur ou à proximité d'un second côté de la carte.

6. Carte NFC selon l'une des revendications 1 à 5, comprenant un premier écran conducteur (71) s'étendant sur un côté de la bobine d'antenne sans traverser son axe magnétique, et un second écran conducteur (73, 73', 73a, 73b) s'étendant sur un autre côté de la bobine d'antenne sans traverser son axe magnétique.

7. Carte NFC selon l'une des revendications 1 à 6, dans laquelle la bobine d'antenne est enroulée autour d'un coeur magnétiquement perméable (31, 31', 31").

8. Carte NFC selon l'une des revendications 1 à 7, dans laquelle le circuit intégré (20) est configuré pour mettre en oeuvre un procédé de modulation de charge active comprenant l'étape consistant à émettre des salves de champ magnétique (FLD2) au moyen d'une bobine d'antenne lorsque des données doivent être envoyées, afin de compenser l'effet négatif de l'écran (71, 73, 73', 73a, 73b) sur la distance de communication maximale offerte par la carte en ce qui concerne l'envoi des données par modulation de charge.

9. Carte NFC selon l'une des revendications 1 à 8, dans laquelle la bobine d'antenne comprend au moins deux bobines (30-1, 30-2, 30-3, 30-4) en série, les bobines présentant des axes magnétiques non parallèles (MA1-MA4), pour améliorer la détection d'un contre-champ magnétique (FEC1) généré par des courants de Foucault (EC1) lorsque la carte est agencée à proximité d'une carte de circuit imprimé (PCB1) en présence d'un champ magnétique externe (FLD1) .

10. Carte NFC selon l'une des revendications 1 à 9, dans laquelle l'écran conducteur (73') comprend au moins une fente (74) afin de réduire l'effet des courants de Foucault (EC3) circulant dans l'écran conducteur en présence d'un champ magnétique externe (FLD1).

11. Carte NFC selon l'une des revendications 1 à 9, dans laquelle l'écran conducteur est divisé en au moins deux sous écrans (73a, 73b) afin de réduire l'effet des courants de Foucault (EC3a, EC3b) circulant dans l'écran conducteur en présence d'un champ magnétique externe.

12. Procédé d'accord d'une bobine d'antenne d'une carte NFC, comprenant les étapes consistant à :
- prévoir une carte (1, 2) selon l'une des revendications 1 à 11, et
- régler une fréquence d'accord du circuit d'antenne (ACT) en présence de l'écran électriquement conducteur (71, 73, 73', 73a, 73b).

13. Procédé permettant d'effectuer une communication sans contact entre une carte NFC (1, 2) et un dispositif NFC externe (ED), comprenant les étapes consistant à :
- prévoir une carte NFC (1, 2) selon l'une des revendications 1 à 11,
- régler une fréquence d'accord du circuit d'antenne de la carte en présence de l'écran électriquement conducteur,
- émettre un premier champ magnétique oscillant avec le dispositif externe (ED),
- placer la carte à proximité des bords d'une carte de circuit imprimé (PCB1), et
- utiliser l'écran conducteur (71) pour protéger la fréquence d'accord du circuit d'antenne contre l'effet de désaccord de la carte de circuit imprimé, afin d'augmenter la distance de communication maximale entre la carte et le dispositif externe (ED).

14. Procédé selon la revendication 13, comprenant en outre une étape de détection, avec la bobine d'antenne de la carte NFC, d'un contre-champ magnétique (FEC1) généré par des courants de Foucault dans la carte de circuit imprimé (PCB1), afin d'augmenter la distance de communication maximale entre la carte et le dispositif externe (ED).

15. Procédé selon l'une des revendications 13 ou 14, comprenant en outre une étape consistant à émettre des salves d'un second champ magnétique oscillant (FLD2) avec la bobine d'antenne de la carte NFC, alors que le dispositif externe (ED) émet le premier champ magnétique oscillant (FLD1), afin de transférer des données (DTx) depuis la carte vers le dispositif externe.

## Patentansprüche

1. NFC- [Near Field Communication - Nahbereichskommunikation] Chipkarte (1, 2), welche Folgendes umfasst:
- einen Antennenschaltkreis (ACT) umfassend eine Antennenspule (30, 30', 30"), welche mindestens eine magnetische Achse aufweist (MA, MA1-MA4), und
- mindestens einen integrierten Schaltkreis (20, 21, 22), der mit dem Antennenschaltkreis verbunden ist,
**dadurch gekennzeichnet, dass**
- die magnetische Achse der Antennenspule zu mindestens einer Seite der Chipkarte im Wesentlichen parallel verläuft,
- die Chipkarte außerdem mindestens eine elektrisch leitende Abdeckung (71, 73, 73', 73a, 73b) aufweist, die in der Nähe der Antennenspule verläuft, welche die magnetische Achse nicht kreuzt, und
- die Chipkarte zwischen der leitenden Abdeckung und der Antennenspule keinerlei magnetisch permeables Material enthält.

2. NFC-Chipkarte gemäß Anspruch 1, in welcher der Antennenschaltkreis eine Abstimmfrequenz aufweist, welche in Anwesenheit der leitenden Abdeckung eingestellt wurde und welche sich nicht verstimmt, wenn ein metallisches Element in der Nähe der elektrisch leitenden Abdeckung platziert wird.

3. NFC-Chipkarte gemäß einem der Ansprüche 1 oder 2, welche Kontaktstellen (50, C1-C8) umfasst, die auf einer ersten Seite der Chipkarte angeordnet sind.

4. NFC-Chipkarte gemäß Anspruch 3, in welcher die leitende Abdeckung (73) auf oder in der Nähe der ersten Seite der Chipkarte verläuft.

5. NFC-Chipkarte gemäß Anspruch 3, in welcher die leitende Abdeckung (71) auf oder in der Nähe einer zweiten Seite der Chipkarte verläuft.

6. NFC-Chipkarte gemäß einem der Ansprüche 1 bis 5, welche eine erste leitende Abdeckung (71), welche auf einer Seite der Antennenspule verläuft, ohne deren magnetische Achse zu kreuzen, und eine zweite leitende Abdeckung (73, 73', 73a, 73b), welche auf einer anderen Seite der Antennenspule verläuft, ohne deren magnetische Achse zu kreuzen, umfasst.

7. NFC-Chipkarte gemäß einem der Ansprüche 1 bis 6, in welcher die Antennenspule um einen magnetisch permeablen Kern (31, 31', 31') gewickelt ist.

8. NFC-Chipkarte gemäß einem der Ansprüche 1 bis 7, in welcher der integrierte Schaltkreis (20) dafür konfiguriert ist, einen aktiven Ladungsmodulationsvorgang durchzuführen, welcher den Schritt bestehend aus der Aussendung von Magnetfeldstrahlen (FLD2) mittels einer Antennenspule umfasst, während die Daten über die maximale Kommunikationsreichweite übertragen werden müssen, welche die Chipkarte hinsichtlich der Übertragung von Daten über die Ladungsmodulation ermöglicht, um die negative Wirkung der Abdeckung (71, 73, 73', 73a, 73b) auszugleichen.

9. NFC-Chipkarte gemäß einem der Ansprüche 1 bis 8, in welcher die Antennenspule mindestens zwei hintereinander geschaltete Spulen (30-1, 30-2, 30-3, 30-4) umfasst, wobei die Spulen magnetische Achsen (MA1-MA4) umfassen, die nicht parallel sind, um das Auffinden eines Magnetgegenfeldes (FEC1), das durch die Foucault-Ströme (EC1) erzeugt wurde, zu verbessern, während die Chipkarte in der Nähe einer Leiterplatte (PCB1) in Anwesenheit eines externen Magnetfeldes (FLD1) angeordnet ist.

10. NFC-Chipkarte gemäß einem der Ansprüche 1 bis 9, in welcher die leitende Abdeckung (73') mindestens einen Schlitz (74) umfasst, um die Wirkung der Foucault-Ströme (EC3) zu reduzieren, welche in der leitenden Abdeckung in Anwesenheit eines externen Magnetfeldes (FLD1) zirkulieren.

11. NFC-Chipkarte gemäß einem der Ansprüche 1 bis 9, in welcher die leitende Abdeckung in mindestens zwei Unterabdeckungen (73a, 73b) aufgeteilt ist, um die Wirkung der Foucault-Ströme (EC3a, EC3b) zu reduzieren, welche in der leitenden Abdeckung in Anwesenheit eines externen Magnetfeldes zirkulieren.

12. Verfahren zur Abstimmung einer Antennenspule mit einer NFC-Chipkarte, welches die folgenden Schritte umfasst:
- Vorsehen einer Chipkarte (1, 2) gemäß einem der Ansprüche 1 bis 11, und
- Steuern einer Abstimmfrequenz des Antennenschaltkreises (ACT) in Anwesenheit der elektrisch leitenden Abdeckung (71, 73, 73', 73a, 73b).

13. Verfahren, welches eine kontaktlose Kommunikation zwischen einer NFC-Chipkarte (1, 2) und einem externen NFC-Gerät (ED) ermöglicht und die folgenden Schritte umfasst:
- Vorsehen einer NFC-Chipkarte (1, 2) gemäß einem der Ansprüche 1 bis 11,
- Steuern einer Abstimmfrequenz des Antennenschaltkreises der Chipkarte in Anwesenheit der elektrisch leitenden Abdeckung,
- Abstrahlen eines ersten Magnetfeldes, das mit dem externen Gerät (ED) oszilliert,
- Positionieren der Chipkarte in der Nähe der Ränder einer Leiterplatte (PCB1), und
- Nutzen der leitenden Abdeckung (71), um die Abstimmfrequenz des Antennenschaltkreises gegen die gegenteilige Wirkung der Leiterplatte zu schützen, um die maximale Kommunikationsreichweite zwischen der Chipkarte und dem externen Gerät (ED) zu erhöhen.

14. Verfahren gemäß Anspruch 13, welches weiterhin einen Schritt des Auffindens mit der Antennenspule der NFC-Chipkarte eines Magnetgegenfeldes (FEC1), das durch Foucault-Ströme in der Leiterplatte (PCB1) erzeugt wurde, um die maximale Kommunikationsreichweite zwischen der Chipkarte und dem externen Gerät (ED) zu erhöhen, umfasst.

15. Verfahren gemäß einem der Ansprüche 13 oder 14, welches weiterhin einen Schritt des Aussendens von Strahlen eines zweiten Magnetfeldes (FLD2) umfasst, das mit der Antennenspule der NFC-Chipkarte oszilliert, während das externe Gerät (ED) das erste oszillierende Magnetfeld (FLD1) ausstrahlt, um Daten (DTx) von der Chipkarte zu dem externen Gerät zu übertragen.

## Claims

1. An NFC card (1, 2) comprising:
- an antenna circuit (ATC) comprising an antenna coil (30, 30', 30") having at least one magnetic axis (MA, MA1-MA4), and
- at least one integrated circuit (20, 21, 22) linked to the antenna circuit,
Wherein
- the magnetic axis of the antenna coil is substantially parallel to at least one side of the card,
- the card further comprises at least one electrically conductive screen (71, 73, 73', 73a, 73b) extending near the antenna coil, which does not cross the magnetic axis, and the card does not include any magnetically permeable material between the conductive screen and the antenna coil.

2. The NFC card according to claim 1, wherein the antenna circuit has a tuning frequency which has been set in the presence of the electrically conductive screen, and does not detune when a metallic element is placed near the electrically conductive screen.

3. The NFC card according to one claims 1 or 2, comprising contact pads (50, C1-C8) arranged on a first side of the card.

4. The NFC card according to claim 3, wherein the conductive screen (73) extends on or near the first side of the card.

5. The NFC card according to claim 3, wherein the conductive screen (71) extends on or near a second side of the card.

6. The NFC card according to one of claims 1 to 5, wherein a first conductive screen (71) extending on one side of the antenna coil without crossing its magnetic axis, and a second conductive screen (73, 73', 73a, 73b) extending on another side of the antenna coil without crossing its magnetic axis.

7. The NFC card according to one of claims 1 to 6, wherein the antenna coil is wound around a magnetically permeable core (31, 31', 31").

8. The NFC card according to one of claims 1 to 7, in which the integrated circuit (20) is configured to implement an active load modulation method comprising emitting bursts of magnetic field (FLD2) by way of the antenna coil when data are to be sent, in order to compensate the negative effect of the screen (71, 7., 73', 73a, 73b) on the maximum communication distance offered by the card for the sending of data by load modulation.

9. The NFC card according to one of claims 1 to 8, wherein the antenna coil comprises at least two coils (30-1, 30-2, 30-3, 30-4) in series, the coils having non-parallel magnetic axes (MA1-MA4), to enhance the sensing of a counter magnetic field (FECI) generated by eddy currents (EC1) when the card is arranged near a printed circuit board (PCB1) in the presence of an external magnetic field (FLD1).

10. The NFC card according to one of claims 1 to 9, wherein the conductive screen (73') comprises at least one slot (74) to reduce the effect of eddy currents (EC3) circulating in the conductive screen in the presence of an external magnetic field (FLD1).

11. The NFC card according to one of claims 1 to 9, wherein the conductive screen is split into at least two sub-screens (73a, 73b) to reduce the effect of eddy currents (EC3a, EC3b) circulating in the conductive screen in the presence of an external magnetic field.

12. A method for tuning an antenna coil of an NFC card, the method comprising:
- providing a card (1, 2) according to one of claims 1 to 11, and
- setting a tuning frequency of the antenna circuit (ACT) in the presence of the electrically conductive screen (71, 73, 73', 73a, 73b).

13. A method for performing a contactless communication between an NFC card (1, 2) and an NFC external device (ED), the method comprising:
- providing an NFC card (1, 2) according to one of claims 1 to 11,
- setting a tuning frequency of the antenna circuit of the card in the presence of the electrically conductive screen,
- emitting a first oscillating magnetic field with the external device (ED),
- placing the card near the edges of a printed circuit board (PCB1), and
- using the conductive screen (71) to protect the tuning frequency of the antenna circuit against the detuning effect of the printed circuit board, to increase the maximum communication distance between the card and the external device.

14. The method according to claim 13, further comprising sensing, with the antenna coil of the NFC card, a counter magnetic field (FECI) generated by eddy currents in the printed circuit board (PCB1), to increase the maximum communication distance between the card and the external device (ED).

15. The method according to one of claims 13 or 14, further comprising emitting bursts of a second oscillating magnetic field (FLD2) with the antenna coil of the NFC card, while the external device (ED) emits the first oscillating magnetic field (FLD1), to transfer data (DTx) from the card to the external device.
